Europäisches Patentamt

(19) European Patent Office

Office européen des brevets

(11) Publication number: **0 135 419**
**A2**

(12) **EUROPEAN PATENT APPLICATION**

(21) Application number: **84401555.2**

(22) Date of filing: **24.07.84**

(51) Int. Cl.⁴: **B 01 D 13/00**

(30) Priority: **26.07.83 US 517453**

(43) Date of publication of application:
**27.03.85 Bulletin 85/13**

(84) Designated Contracting States:
**AT BE CH DE FR GB IT LI LU NL SE**

(71) Applicant: **Kaplan, Vladimir**
**13103 Wilton Oaks Drive**
**Silver Spring Maryland 20906(US)**

(72) Inventor: **Kaplan, Vladimir**
**13103 Wilton Oaks Drive**
**Silver Spring Maryland 20906(US)**

(74) Representative: **Ahner, Francis et al,**
**CABINET REGIMBEAU 26, avenue Kléber**
**F-75116 Paris(FR)**

(54) Method of membrane evaporation and apparatus.

㊄ A method and apparatus for evaporation are disclosed in which (1) a liquid to be treated and a carrier for evaporating molecules are maintained in contact with opposite sides of a thin membrane which has capillaries extending between the opposite sides of the membrane of substantially uniform size; (2) the liquid is forced to enter the capillaries to a level which is separated from a second side of the membrane by a distance which is preferably less than the mean free path of the molecules which are to be evaporated; (3) the diameters of the capillaries are chosen so that the evaporating substance exerts a partial pressure in the proximity of a convex capillary meniscus which is significantly higher than the corresponding partial pressure in the evaporate's carrier.

- 1 -                    00028

## TITLE OF THE INVENTION
METHOD OF MEMBRANE EVAPORATION AND APPARATUS

## TECHNICAL FIELD

This invention relates to the art of evaporation, particularly the art of employing a porous membrane to promote evaporation of a liquid and for use in separation of substances.

## BACKGROUND ART

Evaporation of a liquid has been investigated somewhat thoroughly. The generally accepted theory of evaporation is that the molecules of the substance are in continuous motion and are bound to each other by various molecular forces. The energy of the molecules follows a distribution, and statistical theory holds that the distribution is generally bell-shaped. Evaporation occurs when molecules having higher than average energy escape from an exposed surface of the substance when their velocity is too great to be restrained by the molecular forces. The molecules which escape from the exposed surface also have a distribution of energies and they exert a partial pressure corresponding to the physical and chemical nature of the evaporating substance and surrounding conditions such as pressure and temperature. The escaped molecules continue their motion, but being freed from the mother-liquid they are able to travel longer distances. The ability of these molecules to move in the gaseous stage is described in terms of molecular mean free path, which is the average distance between collisions. By traveling away from the liquid, the evaporated molecules build a mass transfer boundary layer where the concentration of the evaporated substance decreases rapidly with the distance from the mother-liquid.

The process of evaporation is used to carry out one or more of the following three major functions:

1. to increase the content of a certain substance in a surrounding or a passing flow (humidification);

2. to reduce the thermal energy of a given substance (cooling); and

3. to segregate components of a mixture ("liquid-liquid" separation, drying).

Processes of humidification and evaporative cooling deal basically with water as the substance to be evaporated. Evaporative separation is widely used in the process of distillation. According to this process, substances having different boiling points may be separated by the process of evaporation since the substance having a lower boiling point will evaporate at a much higher rate. A problem arises when at some point during distillation the components in the mixture come to a concentration which cannot be changed by distillation, and distillation of this mixture results in production of a gaseous substance having components in the same proportions as that of the liquid mixture. Such a mixture is known as an azeotropic substance.

Membranes which permit selective diffusion of materials are also known. These membranes rely upon chemical transmission of a solvent through a semi-permeable membrane. When pressure is applied to liquid on the side of the membrane having a higher solute concentration, the flow of liquid may be stopped. The amount of pressure necessary to stop the flow of liquid is known as the osmotic pressure.

It is also known that gases and liquids will diffuse through a perforated material. These materials typically have a microporous structure, the diameter of the pores being on the order of one to several hundred microns. U.S. Patent 3,651,618 (Klein) teaches the use of a sintered, lyophobic synthetic material for separation of fluids. The size of the pores is preferably 5 to 200 microns, and diffusion takes place across the surface of the membrane. The distinguishing feature of the process disclosed in this patent is that the separation is initiated from the membrane-liquid interface area, i.e., the escaped molecules must overcome the entire thickness of the membrane before they reach its opposite side.

U.S. Patent 4,265,713 (Ching) teaches a composite membrane which may be used for distillation. The composite membrane comprises a first thin lyophobic microporous layer, and a second thin lyophilic layer. Evaporation takes place within a lyophobic membrane, and the lyophilic membrane prevents the intrusion of the distilland into the pores of the lyophobic layer. The lyophilic layer is adjacent the distilland while the lyophobic layer is adjacent the distillate. This apparatus prevents a condition known as water-logging when the membrane is used in the desalination of salt water. The preferred hydrophobic material is polytetrafluoroethylene having a mean pore size of less than 0.5 micron.

A phenomenon of porous evaporation is also known wherein a remarkable increase in mass transfer is obtained when a liquid is forced through a sintered metallic or ceramic plate having microcapillaries. The liquid is brought to the evaporative surface, and a spurt of evaporating molecules diminishes the laminer underlayer of the evaporate's carrier flow. The mass transfer coefficient in such a device is tens of times higher than that from a flat, open liquid surface. Unfortunately, the sintered plates used in this application suffer from two major drawbacks. First, it is almost impossible to provide a device of reasonable size yet having a large mass transfering surface. Second, a high pressure is required to bring the liquid to the surface through a plate which is at least one-eighth inch thick.

## SUMMARY OF THE INVENTION

In the disclosed invention, the phenomenon of porous evaporation is combined with the membrane-separation technique. This combination produces a qualitatively new process which has several distinct advantages. First, it enables a large heat and mass transferring area to be incorporated into a compact device. Second, it allows the prior evaporative process which operates at boiling point to be replaced by a process requiring only low levels of energy. Third, it provides an energy-efficient method for liquid separation including separation of an azeotropic substance. Fourth, it provides a technique for increasing the efficiency of various heat-consuming systems such as air conditioning and drying.

The invention is a method and apparatus for employing a porous membrane to increase the rate of evaporation of a substance, and to facilitate separation of one substance from another.

A substance is placed in contact with a first side of a porous membrane, and evaporation takes place through the pores so that the evaporated molecules each the opposite, second, side of the membrane. In accordance with the invention, pressure is applied to the substance to force it into the pores so that the distance between the top of the substance in the pore and the other side of the membrane is significantly less than the thickness of the membrane. This means that the molecules which escape from the surface of the substance in the pores travel a very short remaining distance of the pore and escape to the opposite side of the membrane thus entering a space where they can be picked up by the evaporate's carrier.

In addition, the diameter of the pores is chosen so that the capillary pressure increases the vapor pressure of the substance so that it is greater than the partial pressure of the substance in the absence of the curved surface inherent in small capillaries.

In addition to increasing the rate of evaporation of a substance, the method and apparatus of the invention are particularly useful for separation of substances especially in an azeotropic mixture. In accordance with the invention, when the molecular mean free paths of the substances of the azeotropic mixture are different, separation is facilitated by causing the mixture to enter the pores of the porous membrane to allow the substance having a greater molecular mean free path to evaporate preferentially with respect to the substance having a smaller molecular mean free path. Evaporation of the substance having the shorter molecular mean free path is substantially reduced by providing a membrane having a thickness such that the distance from the top of the substance in the pore to the second surface of the membrane is at least greater than the shorter molecular mean free path.

It is an object of this invention to provide a method and apparatus to promote evaporation of a substance through a porous membrane.

It is a further object of this invention to provide a method and apparatus for causing a substance to be evaporated to enter the pores of a porous membrane so that the distance between the substance and an opposite side of the membrane is less than the thickness of the membrane.

It is a further object of this invention to provide a method and apparatus for easily separating the components of a mixture, especially an azeotropic one.

## BRIEF DESCRIPTION OF THE DRAWINGS

Figure 1 is a diagram showing evaporation in accordance with prior art.

Figure 2 is a diagram showing evaporation in accordance with the invention.

Figure 2A is a diagram and graph illustrating the principle of the invention.

Figure 3 is a diagram showing distillation of an azeotropic mixture in accordance with the invention.

Figure 4 is a graphical illustration showing increase in evaporation in accordance with the invention.

Figure 5 is a schematic diagram of an apparatus in accordance with the invention.

Figure 6 is a graphical illustration of pressure variations to be used with the apparatus of Figure 5.

## DETAILED DESCRIPTION OF THE INVENTION

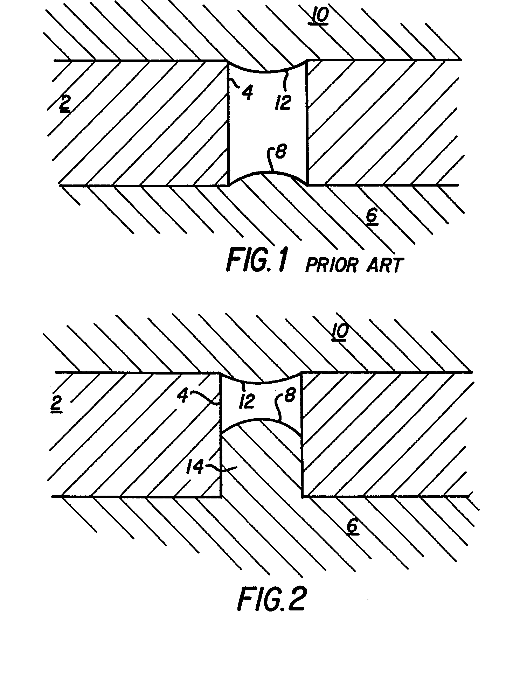

Figure 1 shows a known method of evaporation through a porous membrane. A membrane 2 has a plurality of pores 4. The membrane is a known sintered material, for example sintered polytetrafluoroethylene. A substance to be evaporated 6 is located on one side of the membrane 2, and a meniscus 8 is formed in the pore 4. Molecules having enough energy to escape the substance 6 travel through the pore 4 and exit by the other side of the membrane. A substance 10 is placed on a second side of the membrane and forms meniscus 12 if it is a liquid. Substance 10 may be a gaseous carrier for the evaporated molecules, in which case the meniscus 12 will not be formed. The liquid substance 6 does not enter the pore 4 and the distance which an evaporating molecule must travel substantially affects the efficiency of the prior art method since only a limited portion of the molecules is able to reach the second side of the membrane 2. Moreover, the cross-section of the pore 4, or capillary does not enhance, or even facilitate, the mass transfer because most prior art methods provide liquid bodies on both sides of the membrane. Thus, the effect of capillary pressure is nullified.

Carrier 10 is placed on the second side of the membrane, and it picks up the evaporated molecules at a rate proportional to the difference between the concentration of the evaporate's molecules in the exiting cross section and in the carrier flow.

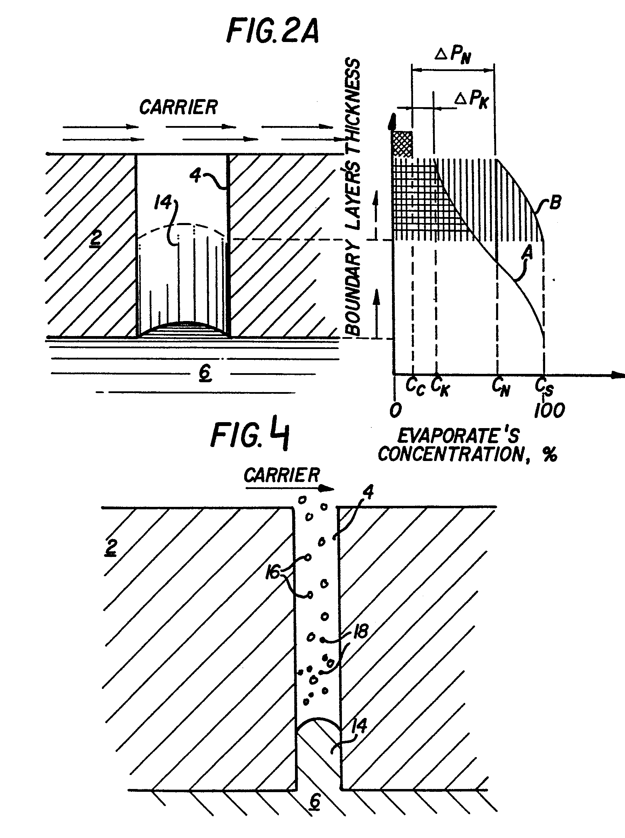

Figure 2 is an illustration of evaporation in accordance with the invention. The membrane 2 has pores 4 as shown in Figure 1. The substance 6 is placed under pressure so that a column 14 of the substance 6 enters the pore 4. A meniscus 8 is formed as shown in Figure 1 due to the interaction of the substance 6 with the material of the membrane 2. In accordance with the invention, the column 14 brings the to-be-treated substance closer to the second side of the membrane, thus reducing the traveling distance for the molecules which escape the surface 8. It is to be noted that the pressure applied to the substance 6 is not enough to force the substance completely through the pores 4 of the membrane, but rather it is sufficient only to provide a column 14 which extends partially into the pore 4.

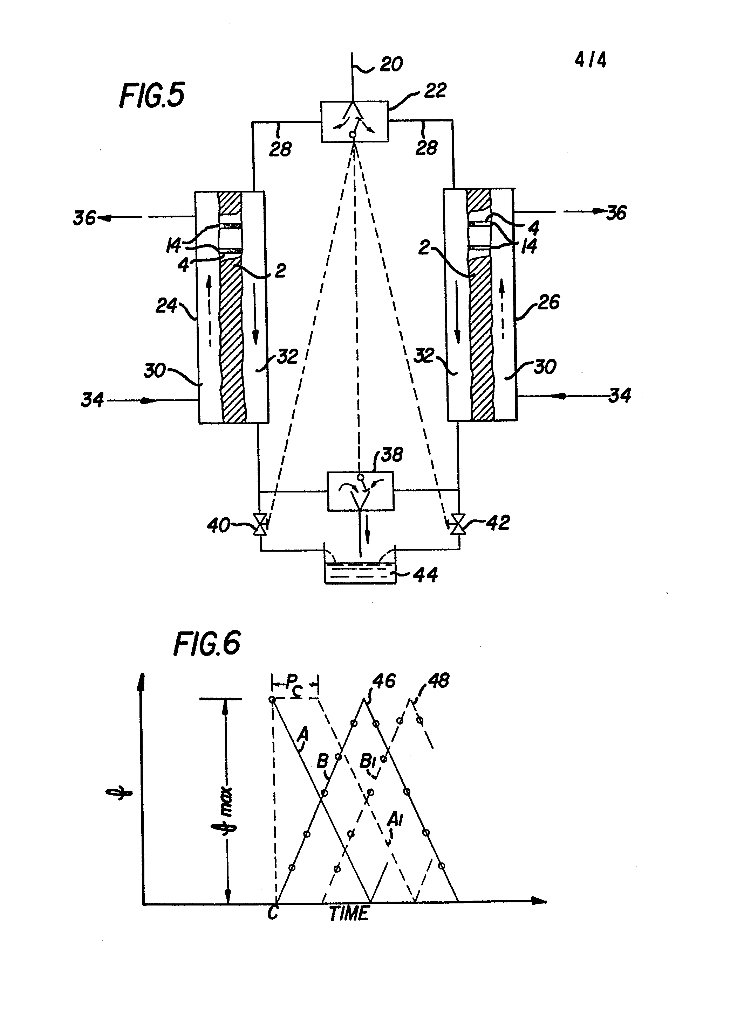

The method shown in Figure 2 increases the rate of evaporation markedly, and Figure 4 is a graphical illustration of the effect of pressurizing the substance 6. The horizontal axis represents the pressure across the membrane 2 measured in inches of water. The vertical axis is the percent increase in the rate of evaporation, and is defined as $M = \dfrac{\beta_m - \beta_o}{\beta_o}$ where $\beta_m$ is defined as the rate of evaporation from a membrane surface, and $\beta_o$ is the rate of evaporation from a flat surface. The rate of evaporation is measured in units of $\dfrac{gm}{m^2\text{-}hr}$. The lines on the graph of Figure 4 represent data for various pore sizes, as indicated on each of the lines. The pore sizes range from 5 m£ to .45 m£.

Figure 4 thus shows that the rate of evaporation across a porous membrane is generally proportional to the pressure across the membrane. This is believed to be a result of the substance 6 entering the pore 4, thus reducing the distance which an evaporated molecule must travel.

Figure 2A further illustrates the basis of the inventive method. Evaporating molecules create a concentration profile known as a mass-transfer boundary layer inside the pore 4. The portion at the left shows a column 14 of a substance in a pore 4. The portion at the right shows typical shapes of concentration profiles for the prior art and for the invention.

The vertical axis of the graph on the right is the thickness of the boundary layer. This axis is aligned with the figure on the left so that the distance along the vertical axis is the same as the distance along pore 4. The prior art concentration is shown by curve A, and that of the invention by curve B. In conventional methods, the rate of evaporation depends on the concentration $C_k$ while in the inventive method the rate of evaporation is determined by the concentration $C_n$ which is much greater than $C_k$. $C_c$ represents the concentration of the evaporate in the carrier flow on the second side of the membrane. For simplicity, no profile in the carrier has been illustrated. The driving force of evaporation, the partial pressure difference, is proportional to corresponding concentrations. Thus, $\Delta P_k$ is a function of $C_k$ and $C_c$, and $\Delta P_N$ is significantly greater than $\Delta P_k$.

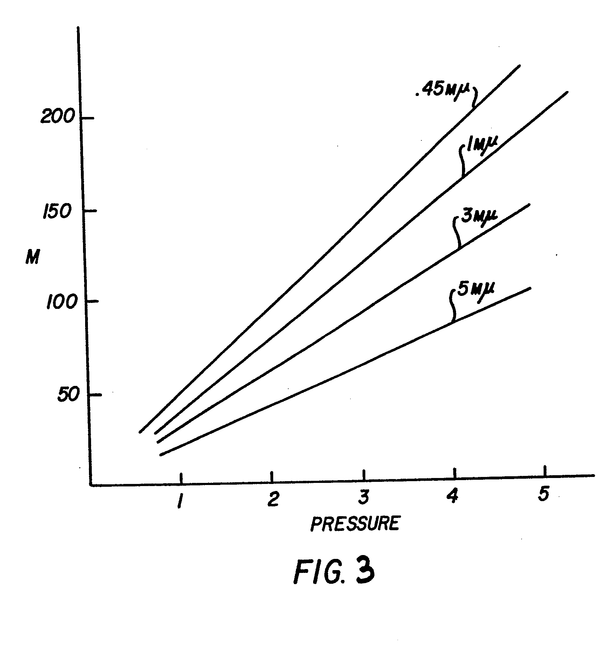

Figure 3 illustrates how the method of the invention may be used to separate components of an azeotropic mixture. The substance 6 is pressurized to force some of the substance into pore 4, thus causing a column 14 to be produced in the pore 4. A column 14 is at a height such that molecules of one of the components will escape to the other side of the membrane in a much greater proportion than molecules of the second component. The molecules which escape are illustrated by open circles 16, and in accordance with the explanation above, they have a mean free path greater than the mean free path of the molecules of the second component which are illustrated by solid dots 18. The latter do not escape, or escape to a lower extent, and thus do not evaporate substantially.

It will thus be appreciated that separation of the components of the azeotropic mixture 6 will be easily accomplished since these components typically have different molecular mean free paths.

The distance between the top of column 14 and the second surface of the membrane 2 is preferably less than the molecular mean free path at a given temperature and less than 70% of the thickness of the membrane. The pressure required to be applied to the substance 6 depends upon the temperature of the substance, and it possible to raise or lower the temperature of the substance 6 in accordance with the feasible pressures and the thickness of the porous membrane 2.

the size of the capillaries must be such that the capillary pressure is 20 to 60 percent of the maximum capillary pressure. The maximum capillary pressure is determined by the following

relationship: $P_c = \dfrac{2\sigma}{r}\ \dfrac{\rho v}{\rho e}$; where $P_c$ is the

capillary pressure, $\sigma$ is the surface tension, $\rho v$ is the density of the evaporate in the gaseous phase, $\rho e$ is the density of the liquid, and $r$ is the radius of the capillary defined as a minimum radius of a cylindrical channel containing 5 to 7 molecules of the evaporate compactly packed in the channel cross section.

The separation of the components of an azeotropic mixture can be effected by using two adjacent membranes in series wherein the diameters of the pores 4 are different. This technique may provide energy efficiency.

The evaporate's carrier located on the second side of the membrane can be either stationary or flowing. Thus the separation process can be accomplished in either a continuously flowing embodiment or in a batch procedure. An apparatus for effecting separation or evaporation in accordance with the invention is shown in Figure 5. A feed line 20 directs a mixture to be evaporated to a control valve 22 which directs the substance to either of the chambers 24 and 26 through conduits 28. Each of the chambers 24 and 26 is separated into a first portion 32 and a second portion 30 by the membrane 2. A carrier for the distillate is introduced to the portions 30 and 34, is passed through the portions 30, and exits at 36 after picking up the evaporated molecules. The partial pressure of the evaporated substance at 34 depends on the "vapor-liquid" equilibrium conditions. For example, when water is separated from a mixture, the Dew Point in the carrier can be as low as -40 to -60 degrees Fahrenheit and even less in order to achieve a high purity in the remainder.

A valve 38 controls the outlet of the chambers 30 and drain valves 40 and 42 also control the passage of fluid from the chambers 32 into a collection reservoir 44.

The operation of the apparatus shown in Figure 5 may be described with respect to the graph shown in Figure 6 wherein the horizontal axis represents time and the vertical axis represents the pressure across the membrane 2 in each of the chambers 24 and 26. A first line 46 represents the pressure, for example, in chamber 24, and a line 48 represents the pressure, for example, in chamber 26. It will be seen that the pressure in each of the chambers increases cyclically in accordance with the opening and closing of the valves 22, 38, 40 and 42. These valves are connected together as shown by the dashed lines in Figure 5 so that the operation is automatic.

Fluid is first admitted to chamber 24 through valve 22. Valve 38 begins to open with a short delay (2-3 seconds) in order to begin building liquid column 14. Pressure increases in accordance with the ine 46 until the height of the column in the pores 4 is as desired. The pressure may remain for any desired time to allow evaporation to take place. Then, the valves 22 and 38 start to change so as to admit substance to the chamber 26 to increase the pressure there to permit evaporation in accordance with the principles of the invention. Simultaneously, the pressure in portion 32 of the chamber 24 is gradually decreasing. This pressure decrease stops the molecules of the remainder from entering the evaporate's carrier. When the liquid flow is totally cut off from chamber 24, drain valve 40 opens to allow the residual substance to drain from this chamber 24. Pressure from the carrier on the second side of the membrane forces the residual fluid out of the pores 4 when pressure in the chamber 2 is released. Then, the cycle repeats.

The oscillating, or cyclic, mode of separation prevents seizure of the separation which can occur when the mass transfer boundary layer of the remaining liquid develops.

WHAT IS CLAIMED IS:

1. A method to promote evaporation of a first substance through a membrane having a plurality of pores of substantially uniform size comprising placing said first substance in contact with a first surface of said membrane and under pressure to thereby force some of said first substance into pores of said membrane, the distance between the top of said first substance and a second surface of said membrane being less than the thickness of the membrane.

2. The method of Claim 1 wherein the distance between the top of said first substance in said pores and said second surface is less than 70% of the thickness of the membrane.

3. The method of Claim 2 wherein the distance between the top of said first substance in the pores and said second surface of said membrane is less than the molecular mean free path of the evaporated molecules.

4. The method of Claim 3 wherein the dimension of said pores, in a plane parallel to said first surface, is such that the partial pressure exerted by the evaporated molecules of said first substance is amplified by capillary pressure.

5. The method of Claim 4 wherein said first substance is mixed with a second substance.

6. The method of Claim 5 wherein said first and second substances cannot be separated by means of distillation but wherein the molecular mean free path of the molecules of said first substance is greater than the molecular mean free path of said second substance, whereby said first and second substances are separated by the evaporation of said first substance through said membrane.

7. The method of Claim 1 wherein said first substance is mixed with a second substance and the molecular mean free path of said first substance is greater than that of said second substance.

8. The method of Claim 7 wherein said first and second substances have substantially equal boiling points.

9. The method of Claim 1 wherein said pressure is applied to said first substance cyclically.

10. The method of Claim 1 comprising the step of controlling the temperature of said first substance to affect the rate of evaporation.

11. The method of Claim 1 wherein said distance is less than the mean molecular free path.

12. Apparatus for effecting evaporation of a first substance comprising a chamber divided into first and second portions by a porous material, said first chamber being adapted to receive said first substance, means for applying pressure to said first substance such that a portion of said first substance enters a plurality of pores of said porous material so that the distance between the top of the first substance in said pores and a surface of said material contiguous to said second portion in accordance with Claim 1.

13.   The apparatus of Claim 10 wherein the introduction of said first substance into said first portion is controlled by an inlet valve and an outlet valve, and wherein said pressure increases and decreases cyclically.

14.   The apparatus of Claim 11 comprising a plurality of said chambers connected to inlet and outlet means in parallel, whereby the pressure is increased in at least one of said chambers while pressure is decreased in at least one of the other of said chambers.

1/4

FIG.1 PRIOR ART

FIG.2

2/4

## FIG.2A

CARRIER

BOUNDARY LAYER'S THICKNESS

$\triangle P_N$

$\triangle P_K$

B

A

$C_C$ $C_K$ $C_N$ $C_S$

0

100

## FIG.4

EVAPORATE'S
CONCENTRATION, %

CARRIER

3/4

FIG. 3

FIG.5

FIG.6